# EUROPÄISCHE PATENTSCHRIFT

(11) **EP 2 514 692 B1**
(45) Veröffentlichungstag und Bekanntmachung des Hinweises auf die Patenterteilung: **01.10.2014**
(21) Anmeldenummer: 12164402.5
(22) Anmeldetag: 17.04.2012
(51) Int. Cl.: B65G 23/04, B65G 39/02, F16H 55/42

(54) **Speichenrad**
Spoked wheel
Roue à rayons

(30) Priorität: 20.04.2011 DE 102011007813
(43) Veröffentlichungstag der Anmeldung: 24.10.2012
(73) Patentinhaber: HAUNI Maschinenbau AG, 21033 Hamburg (DE)
(72) Erfinder: Hartmann, Florian, 21502 Geesthacht (DE)
(74) Vertreter: Eisenführ Speiser

(56) Entgegenhaltungen:
- EP-B1- 0 080 860
- CH-A- 148 571
- FR-A- 1 256 502
- GB-A- 191 029 066

## Beschreibung

Die Erfindung betrifft ein Speichenrad, insbesondere zum Umlenken einer Förderkette, mit einer Nabe, die eine zentrale Bohrung zur Aufnahme einer Welle oder Achse enthält, mit einem zur zentralen Bohrung konzentrisch verlaufenden ringförmigen Radkranz und mit mehreren sich von der Nabe zum ringförmigen Radkranz, bevorzugt radial, erstreckenden Speichen.

Ein derartiges Speichenrad ist hinlänglich bekannt und wird in verschiedensten Anwendungen eingesetzt.

Eine Anwendung eines Speichenrades besteht darin, eine Förderkette umzulenken. Dies ist beispielsweise in einem Speicher für stabförmige Produkte der Tabak verarbeitenden Industrie, wie insbesondere für Zigaretten oder Zigarettenfilter, der Fall. Ein solcher Speicher, wie er beispielsweise in der DE 43 02 745 A1 gezeigt ist, kann die Form einer Schraube mit in die Länge gezogenen Windungen haben, wobei eine Endlosförderkette, die einen Strom von mehrlagig gestapelten stabförmigen Produkten trägt, um voneinander beabstandete Säulen aus Rädern läuft. Dabei liegen die stabförmigen Produkte quer zur Förderrichtung in gestapelter Weise auf der Förderkette auf, die zur Aufnahme der stabförmigen Produkte aus im Wesentlichen flachen, wannenförmigen Kettengliedern besteht. Kritisch ist die Phase der Umlenkung um die Räder.

Denn dadurch wird die Förderkette gekrümmt, was eine gegenseitige Aufspreizung der sich quer zur Förderrichtung erstreckenden stabförmigen Produkte zur Folge hat. Ist dabei die Krümmung zu stark, erhöht sich die Gefahr, dass durch die Aufspreizung der aus den mehreren Lagen von stabförmigen Produkten bestehende Strom instabil wird, so dass einzelne stabförmige Produkte von der Förderkette fallen können. Deshalb ist man bestrebt, den Durchmesser der Räder in einer solchen Speichervorrichtung so groß wie möglich zu wählen, um im Gegenzuge die Krümmung pro Längeneinheit möglichst gering zu halten und dadurch ein allzu starkes Aufspreizen der stabförmigen Produkte voneinander zu verhindern. Deshalb wird als Durchmesser für derartige Räder nicht selten ein Wert von mindestens 1,50m und häufig auch sogar über 2m gewählt. Mit dem Durchmesser steigen aber auch Masse und Gewicht an. Deshalb werden in solchen Fällen Speichenräder verwendet, da sich Speichenräder durch eine relativ geringe Masse und somit ein relativ geringes Gewicht bei gegebener axialer Steifigkeit auszeichnen.

Allerdings erfordern Speichenräder einen erhöhten Herstellungsaufwand. Ein Verfahren besteht darin, Speichenräder zu schmieden. Ein weiteres übliches Verfahren besteht darin, Speichenräder aber auch durch Sägen und/oder Fräsen herzustellen. Sowohl das Schmiedeverfahren als auch das Fräsverfahren erlauben eine einstückige Herstellung von Speichenrädern. Allerdings steigt mit zunehmendem Durchmesser auch der Materialverbrauch stark an. Außerdem hat sich herausgestellt, dass die Zunahme des Durchmessers die axiale Steifigkeit je nach Konstruktion des Speichenrades mehr oder weniger stark negativ beeinflussen kann.

Es ist daher Aufgabe der vorliegenden Erfindung, für ein Speichenrad insbesondere mit einem größeren Durchmesser eine Konstruktion vorzuschlagen, die einen geringen Herstellungsaufwand erfordert, Material sparend und leichtgewichtig ist und dennoch eine hohe axiale Steifigkeit aufweist.

Gelöst wird diese Aufgabe mit einem Speichenrad, insbesondere zum Umlenken einer Förderkette, mit einer Nabe, die eine zentrale Bohrung zur Aufnahme einer Welle oder Achse enthält, mit einem zur zentralen Bohrung konzentrisch verlaufenden ringförmigen Radkranz und mit mehreren sich von der Nabe zum Radkranz, bevorzugt radial, erstreckenden Speichen, dadurch gekennzeichnet, dass die Speichen eine Schichtung von mehreren übereinanderliegenden, sich von der Nabe erstreckenden und miteinander befestigten laschenförmigen Speichenelementen aufweisen, von denen jedes Speichenelement eine Schicht bildet, wobei zumindest über einen Abschnitt der Schichtung die Länge der Speichenelemente von Schicht zu Schicht abnimmt und mindestens ein Speichenelement mit dem Radkranz verbunden ist.

Demnach wird mit der Erfindung ein Speichenrad in sog. Schichtbauweise geschaffen, indem die Speichen eine Schichtung von mehreren übereinanderliegenden, sich von der Nabe erstreckenden und miteinander befestigten laschenförmigen Speichenelementen aufweist, wobei die Speichenelemente der zweiten und jeder weiteren Schicht kürzer als die Speichenelemente der jeweils darunter befindlichen benachbarten Schicht sind und außerdem die einzelnen Speichenelemente separat gefertigt sind. Durch die Befestigung der laschenförmigen Speichenelemente miteinander lässt sich dann eine hohe axiale Steifigkeit erzielen. Die erfindungsgemäße Konstruktion zeigt nicht nur eine hohe axiale Steifigkeit, sondern erlaubt auch eine einfache Herstellung des Speichenrades und führt zu einer Reduzierung von Gewicht und einer Einsparung von Material. Letzteres lässt sich insbesondere dadurch erreichen, dass über die Schichtung die von der Nabe gemessene Länge der Speichenelemente von Schicht zu Schicht abnimmt.

Zwar schlägt die WO 97/11293 A1 vor, ein Umlenkrad für eine Kette oder ein Umlenkrad für eine Mehrzahl von Keilriemen aus mehreren Schichten aufzubauen; jedoch handelt es sich bei diesen bekannten Umlenkrädern um sog. Vollräder, die in sämtliche Schichten denselben Durchmesser haben. Somit lässt sich diesem Stand der Technik keine Anregung entnehmen, die Speichen eines Speichenrades mit geschichteten separaten Speichenelementen zu versehen und dabei die Speichenelemente der zweiten und jeder weiteren Schicht kürzer als die Speichenelemente der jeweils darunter befindlichen benachbarten Schicht auszuführen.

Bevorzugte Ausführungen und Weiterbildungen der Erfindung sind in den abhängigen Ansprüchen angegeben.

Bevorzugt nimmt zumindest über einen Abschnitt der Schichtung die Länge der Speichenelemente etwa gleichmäßig von Schicht zu Schicht ab.

Bei einer bevorzugten Ausführung nimmt die Länge der Speichenelemente von Schicht zu Schicht über die gesamte Schichtung ab.

Die Befestigung der Speichenelemente miteinander kann bevorzugt durch Schrauben, Nieten, Klammern und/oder Verschweißen erfolgen.

Eine weitere bevorzugte Ausführung der Erfindung zeichnet sich dadurch aus, dass die Speichenelemente einen, bevorzugt aufgeweiteten, Kopfabschnitt aufweisen, die Nabe aus den Kopfabschnitten der Speichenelemente gebildet ist und die Kopfabschnitte der Speichenelemente eine Stirnfläche aufweisen, die zur Bildung der zentralen Bohrung entsprechend gekrümmt ist. Diese Ausführung hat den Vorteil, dass die Speichenelemente nicht nur zum schicht- oder paketartigen Aufbau der Speichen, sondern zusätzlich auch noch zum schicht- oder paketartigen Aufbau der Nabe verwendet werden. Somit bietet diese Ausführung eine konstruktiv besonders geschickte und zugleich einfache Lösung.

Bevorzugt wird ferner zumindest eine Schicht von einem Flachkörper gebildet, der aus dem Radkranz, den Speichenelementen und einem Nabenabschnitt besteht, wobei der Radkranz, die Speichenelemente und der Nabenabschnitt einstückig miteinander verbunden sind. Ein solcher einstückiger Flachkörper bildet somit eine Art Grundkörper, auf dem wahlweise einseitig oder beidseitig eine Schichtung mit sich von Schicht zu Schicht verkürzenden Speichenelementen aufzubauen ist. Die Verwendung eines solchen einstückigen Flachkörpers trägt dabei ebenfalls zu der hohen axialen Steifigkeit der erfindungsgemäßen Konstruktion bei.

Dabei kann der Flachkörper eine etwa in der Mitte der Schichtung befindliche Schicht bilden. Zwecks Symmetrie kann zu beiden Seiten der Schichtung die Länge der Speichenelemente von Schicht zu Schicht abnehmen.

Zusätzlich oder alternativ kann in mindestens einer Schicht ein Flachkörper vorhanden sein, der aus den Speichenelementen und einem Nabenabschnitt besteht, wobei die Speichenelemente und der Nabenabschnitt einstückig miteinander verbunden sind. Bei dieser Ausführung sollte der Flachkörper mit den kürzesten Speichenelementen eine äußere Schicht bilden, wodurch die Schichtung abgeschlossen wird und somit ein solcher Flachkörper als eine Art sternförmiger Deckel für die Schichtung vorgesehen ist.

Aus Gründen der Gewichtsersparnis sollte das Speichenrad im Wesentlichen aus Aluminium hergestellt sein.

Bevorzugt lässt sich mindestens eines der erfindungsgemäßen Speichenräder zum Umlenken einer stabförmige Produkte der Tabak verarbeitenden Industrie aufnehmenden Förderkette in einer Speichervorrichtung zum Zwischenspeichern der stabförmigen Produkte verwenden.

Beansprucht wird auch noch eine Speichervorrichtung zum Zwischenspeichern von stabförmigen Produkten der Tabak verarbeitenden Industrie, mit einer Förderkette zur Aufnahme der stabförmigen Produkte und mit mindestens einem der erfindungsgemäßen Speichenräder, um das die Förderkette umgelenkt wird.

Zur Herstellung eines erfindungsgemäßen Speichenrades wird aus einer, bevorzugt scheibenförmigen, Platte der Flachkörper ausgeschnitten und werden aus den dabei jeweils zwischen zwei benachbarten Speichenelementen des herausgeschnittenen Flachkörpers freiwerdenden Abschnitten der Platte die übrigen Speichenelemente in im Wesentlichen gleicher Ausrichtung herausgeschnitten. Unter "Herausschneiden" fallen im Sinne der vorliegenden Erfindung nicht nur reine Schneidevorgänge, sondern beispielsweise auch Fräsverfahren.

Dadurch, dass alle separaten Speichenelemente auf der Platte in die gleiche Richtung definiert werden, lassen sich im Wesentlichen Nachteile vermeiden, die ansonsten durch ein Verziehen des Werkstückes auftreten, wenn es aus einem im Allgemeinen verspannten Gefüge gearbeitet wird.

Nachfolgend werden bevorzugte Ausführungsbeispiele der Erfindung anhand der beiliegenden Zeichnungen näher erläutert. Es zeigen:
- Fig. 1: ein Speichenrad gemäß einem ersten Ausführungsbeispiel der Erfindung in einer perspektivischen Darstellung (Fig. 1a), einer Draufsicht (Fig. 1 b) und einer Querschnittsansicht (Fig. 1 c) entlang der in Fig. 1b gezeigten Schnittlinie c-c;
- Fig. 2: ein Schnittmuster zur Herstellung der Komponenten des Speichenrades von Fig. 1 aus einer Platte; und
- Fig. 3: ein Speichenrad gemäß einem zweiten Ausführungsbeispiel der Erfindung in einer perspektivischen Darstellung (Fig. 3a), einer Draufsicht (Fig. 3b) und einer Querschnittsansicht (Fig. 3c) entlang der in Fig. 3b gezeigten Schnittlinie c-c.

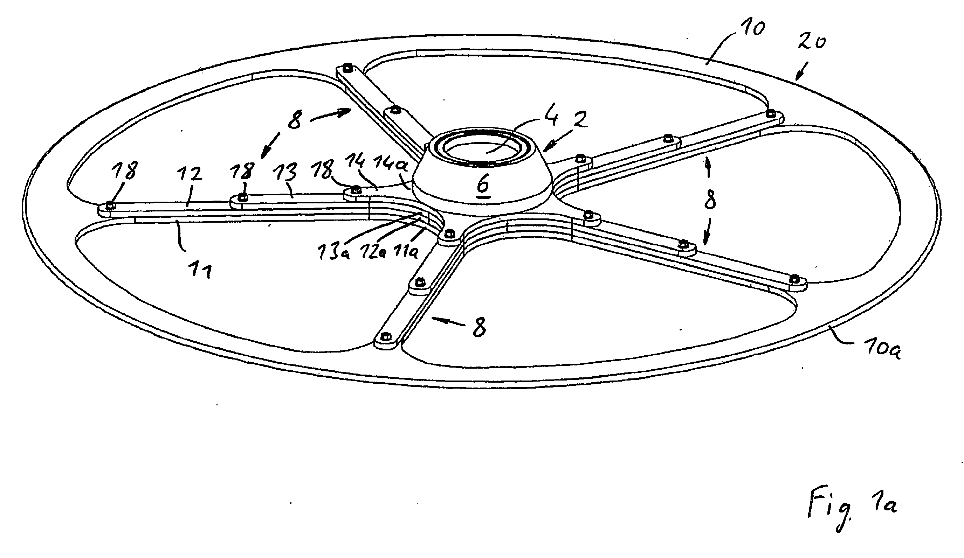

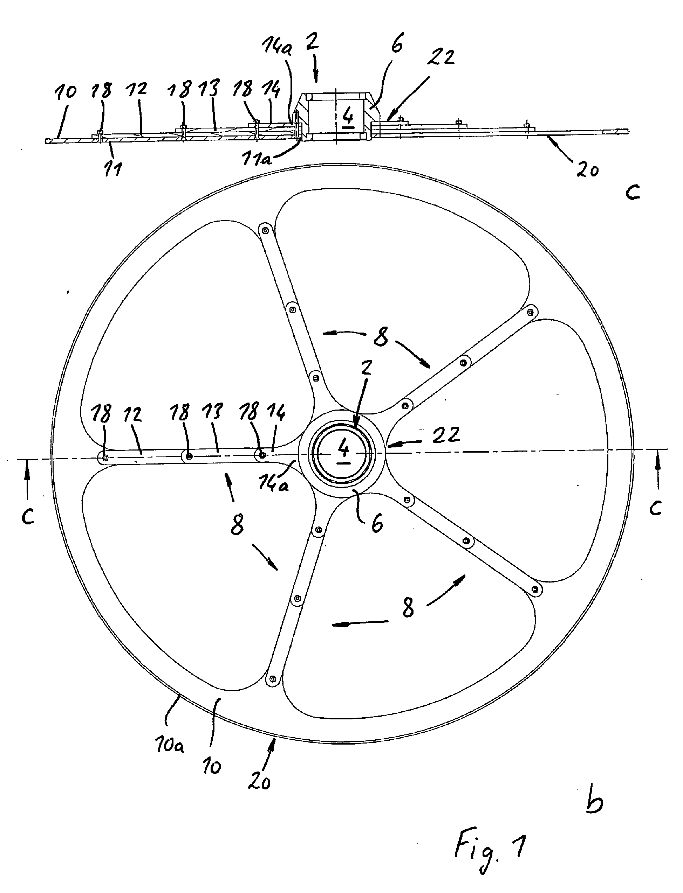

In Fig. 1 ist ein Speichenrad gemäß einem ersten Ausführungsbeispiel der Erfindung gezeigt. Das dort dargestellte Speichenrad weist eine Nabe 2 auf, in der eine zentrale Bohrung 4 zur Aufnahme einer nicht dargestellten Welle oder Achse ausgebildet ist. Die Bohrung 4 ist rechtwinklig zur Ebene des Speichenrades gerichtet, wobei die nicht dargestellte Mittelachse der Bohrung 4 mit der ebenfalls nicht dargestellten Drehachse des Speichenrades zusammenfällt, so dass das Speichenrad um eine in der Bohrung 4 aufgenommene (in den Figuren nicht dargestellte) Welle oder Achse rotieren kann. Die Bohrung 4 wird im dargestellten Ausführungsbeispiel außerdem von einer Hülse 6 begrenzt, die Bestandteil der Nabe 2 ist.

Das Speichenrad weist mehrere Speichen 8 auf, die im dargestellten Ausführungsbeispiel von der Nabe 2 radial nach außen gerichtet und äquidistant zueinander angeordnet sind. Im Ausführungsbeispiel gemäß Fig. 1 sind fünf radial gerichtete Speichen 8 vorgesehen. Ferner weist das Speichenrad einen ringförmigen Radkranz 10 auf, der konzentrisch zur Bohrung 4 und somit zu der nicht dargestellten Drehachse angeordnet ist und von den in Bezug auf die Nabe 2 distalen Enden der Speichen 8 getragen wird. Der Radkranz 10 weist einen Außenrand 10a auf, der eine zylindrische Fläche bildet und beispielsweise in lösbaren Einigriff mit einer vom Speichenrad umzulenkenden, in den Figuren nicht dargestellten Förderkette bringbar ist.

Wie Fig. 1 ferner erkennen lässt, ist das Speichenrad in einer sog. Schichtbauweise aufgebaut, indem die Speichen 8 eine Schichtung von mehreren übereinanderliegenden, sich von der Nabe 2 erstreckenden laschenförmigen Speichenelementen 11 bis 14 aufweist. Aus Gründen der besseren Übersichtlichkeit ist in den Figuren 1a bis c nur die linke Speiche 8 mit den für die Erläuterung der Schichtbauweise verwendeten Bezugszeichen gekennzeichnet. Das Speichenelement 11 in der einen äußeren Schicht bzw. an der einen Außenseite des Speichenrades, die in der Ansicht von Fig. 1 die unterste Schicht bzw. Unterseite bildet, erstreckt sich von der Nabe 2 bis zum Radkranz 10 und ist im dargestellten Ausführungsbeispiel mit dem Radkranz 10 einstückig verbunden. Demgegenüber sind die Speichenelemente 12 bis 14 der zweiten und jeder weiteren Schicht kürzer als die Speichenelemente 11 bis 13 der jeweils darunter befindlichen benachbarten Schicht und enden somit in einem radialen Abstand vom Radkranz 10. Wie Fig. 1 ferner erkennen lässt, nimmt die Länge der Speichenelemente 12 bis 14 über die gesamte Schichtung etwa gleichmäßig von Schicht zu Schicht ab. Wie insbesondere die Figuren 1 a und c erkennen lassen, besteht das in Fig. 1 dargestellte Speichenrad aus vier Schichten. Außerdem sind die einzelnen Speichenelemente 12 bis 14 gegenüber dem Speichenelement 11 separat gefertigt. Durch Befestigung der Speichenelemente 11 bis 14 miteinander lässt sich dann eine hohe axiale Steifigkeit für das gesamte Speichenrad erzielen. Im dargestellten Ausführungsbeispiel erfolgt die Befestigung mithilfe von Schrauben 18. Alternativ ist eine Befestigung aber beispielsweise auch durch Nieten, Klammern oder Verschweißen denkbar. Wie Fig. 1 ferner erkennen lässt, sind im dargestellten Ausführungsbeispiel die Schrauben 18 am in Bezug auf die Nabe 2 distalen Ende des jeweils obersten Speichenelementes 12, 13 bzw. 14 angeordnet.

Die in Bezug auf die Nabe 2 proximalen Enden der Speichenelemente 11 bis 14 bilden sog. Kopfabschnitte 11a bis 14a, die bei geschichteter Anordnung der Speichenelemente 11 bis 14 für den Aufbau einer Speiche 8 gemeinsam einen Nabenabschnitt bilden, so dass die Nabe 2 aus derartigen Nabenabschnitten der einzelnen Speichen 8 zusammengesetzt ist. Hierzu haben im dargestellten Ausführungsbeispiel die Kopfabschnitte 11 a bis 14a eine aufgeweitete Form und sind mit einer zur Bohrung 4 weisenden, in Fig. 1 nicht erkennbaren Stirnfläche versehen, die zur Bildung einer in den Figuren nicht näher erkennbaren die Hülse 6 der Nabe 2 aufnehmenden kreisrunden Öffnung entsprechend gekrümmt ist.

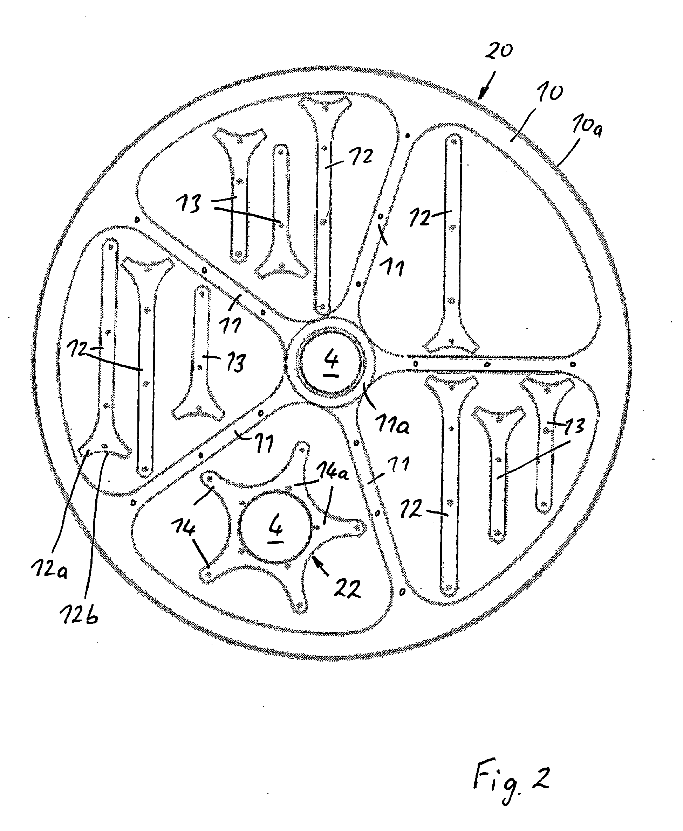

Die einzelnen Bauteile für das in Fig. 1 gezeigte Speichenrad lassen sich komplett aus einer einzigen Platte schneiden, wobei sich die Bauteile zu den weiteren Schichten komplett aus dem Verschnitt der ersten Schicht fertigen lassen. Ein geeignetes Schnittmuster ist beispielhaft in Fig. 2 gezeigt. Basis ist eine Platte, aus der eine Scheibe mit einem Durchmesser entsprechend dem Außendurchmesser des Radkranzes 10 herausgeschnitten wird, oder eine bereits scheibenförmige Platte mit einem Durchmesser entsprechend dem Durchmesser des Radkranzes 10. Wie Fig. 2 erkennen lässt, sind der Radkranz 10 und die Speichenelemente 11 einstückig miteinander verbunden und sind ebenfalls die Kopfabschnitte 11 a der Speichenelemente 11 zur Bildung eines die Bohrung 4 enthaltenden gemeinsamen Nabenabschnittes einstückig miteinander verbunden. Somit bilden der Radkranz 10, die Speichenelemente 11 und deren Kopfabschnitte 11a gemeinsam einen als Grundkörper vorgesehenen einstückigen Flachkörper 20, der im montierten Zustand des Speichenrades die eine äußere Schicht bildet, die in der Ansicht von Fig. 1 die Unterseite des Speichenrades darstellt.

Da durch das Ausschneiden des Flachkörpers 20 jeweils zwischen zwei benachbarten Speichenelementen 11 des herausgeschnittenen Flachkörpers 20 Abschnitte frei werden, wird der aus diesen Abschnitten gebildete Verschnitt zur Fertigung der Speichenelemente 12 und 13 verwendet, wie Fig. 2 erkennen lässt. Dabei werden sämtliche dieser separaten Speichenelemente 12 und 13 in gleicher Ausrichtung herausgeschnitten, um im Wesentlichen Nachteile zu vermeiden, die ansonsten durch ein Verziehen des Werkstückes auftreten, wenn es aus einem im Allgemeinen verspannten Gefüge gearbeitet wird. In diesem Zusammenhang sei ergänzend noch angemerkt, dass zum Herausschneiden der Werkstücke nicht nur Schneidevorgänge, sondern beispielsweise auch Fräsverfahren zur Anwendung kommen können.

Fig. 2 lässt ferner erkennen, dass die kürzesten Speichenelemente 14 gemeinsam einen einstückigen sternförmigen Flachkörper 22 bilden, in dem die Kopfabschnitte 14a dieser Speichenelemente 14 in gleicher Weise wie die Kopfabschnitte 11 a der Speichenelemente 11 beim Flachkörper 20 zu einem die Bohrung 4 enthaltenden gemeinsamen Nabenabschnitt miteinander verbunden sind. Wie Fig. 1 erkennen lässt, bildet dieser sternförmige Flachkörper 22 die andere äußere Schicht, die in der Ansicht von Fig. 1 die oberste Schicht bzw. die Oberseite des Speichenrades darstellt.

Schließlich lässt Fig. 2 auch noch die aufgeweiteten Kopfabschnitte der einzelnen Speichenelemente erkennen, von denen aus Gründen der Übersichtlichkeit beispielhaft nur der Kopfabschnitt des in der Darstellung von Fig. 2 linken Speichenelementes 12 mit dem Bezugszeichen "12a" gekennzeichnet ist. Auch lässt in diesem Zusammenhang Fig. 2 erkennen, dass die Stirnflächen der aufgeweiteten Kopfabschnitte der Speichenelemente entsprechend der Mantelfläche der Hülse 6 der Nabe 2 gekrümmt sind; aus Gründen der Übersichtlichkeit ist stellvertretend nur die Stirnfläche des Kopfabschnittes 12a des in der Darstellung von Fig. 2 linken Speichenelementes 12 mit dem Bezugszeichen "12b" gekennzeichnet.

Zur Herstellung der einzelnen Bauteile des in Fig. 1 gezeigten Speichenrades mithilfe eines zuvor anhand von Fig. 2 beschriebenen Verfahrens nur eine einzige gemeinsame Platte zu verwenden, trägt dem Umstand Rechnung, dass die einzelnen Schichten im dargestellten Ausführungsbeispiel die gleiche Dicke besitzen, wie insbesondere Fig. 1c erkennen lässt. Bevorzugt beträgt die Dicke der Platte 10mm. Hierfür eignet sich Metallblech, wobei aus Gewichtsgründen bevorzugt Aluminiumblech verwendet wird.

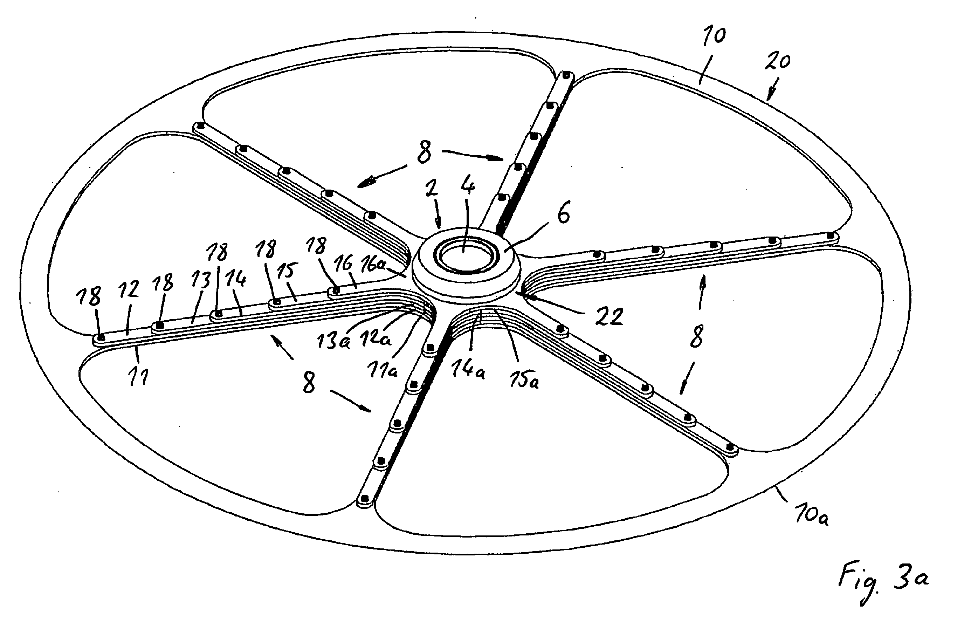

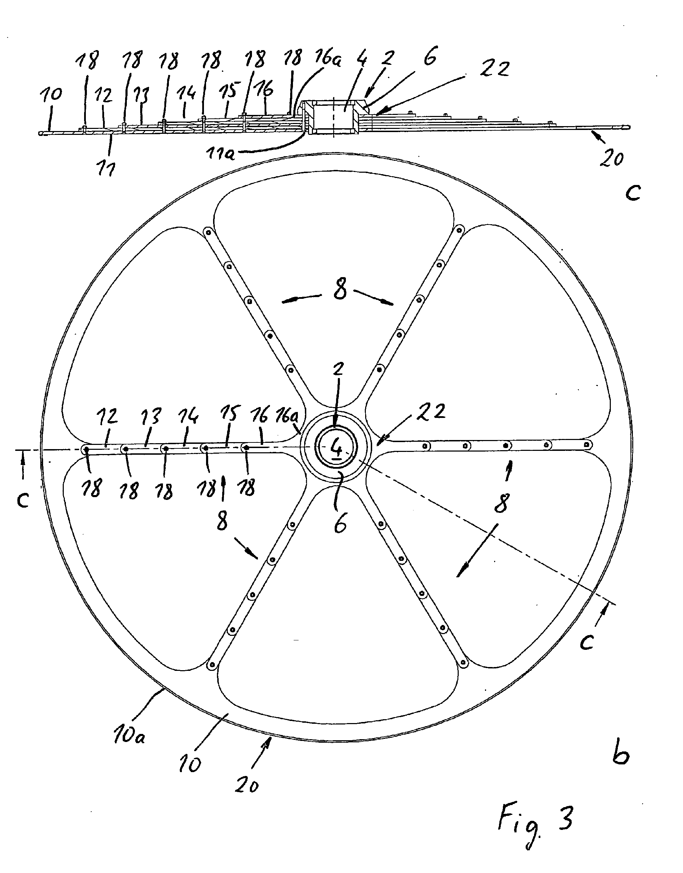

In Fig. 3 ist ein Speichenrad gemäß einer zweiten bevorzugten Ausführung dargestellt, die sich von der ersten Ausführung gemäß Fig. 1 lediglich dadurch unterscheidet, dass das Speichenrad sechs Speichen 8 aufweist und der Schichtaufbau aus sechs Schichten besteht. Somit sind bei diesem Ausführungsbeispiel zur Bildung der Speichen 8 jeweils sechs Speichenelemente 11 bis 16 vorgesehen. Von diesen Speichenelementen bilden die längsten Speichenelemente 11 zusammen mit dem Radkranz 10 den als Grundkörper vorgesehenen Flachkörper 20 in der einen äußeren Schicht (in der Darstellung von Fig. 3 die unterste Schicht) und die kürzesten Speichenelemente 16 den sternförmigen Flachkörper 22 in der anderen äußeren Schicht (in der Darstellung von Fig. 3 obersten Schicht). Im Übrigen wird auf die zuvor anhand von Fig. 1 gegebene Beschreibung des ersten Ausführungsbeispiels zur Vermeidung von Wiederholungen verwiesen, wobei zwischen beiden Ausführungen übereinstimmende Bauteile auch in Fig. 3 mit denselben Bezugszeichen gekennzeichnet sind. Im Gegensatz zu der Darstellung von Fig. 2 benötigt ein Speichenrad gemäß der in Fig. 3 gezeigten zweiten Ausführung aufgrund der höheren Anzahl der Speichenelemente 11 bis 16 eher einen rechteckigen Zuschnitt, dessen ,Ecken' dann für die Herstellung weiterer Speichenelemente vorteilhaft verwendet werden können.

Während die Speichenräder der anhand der Figuren zuvor beschriebenen Ausführungsbeispiele einen einseitigen Schichtaufbau aufweisen, ist es beispielsweise alternativ auch denkbar, einen symmetrischen Schichtaufbau zu realisieren, bei dem in der Mitte der als Grundkörper vorgesehene Flachkörper 20 angeordnet ist und zu dessen beiden Seiten die Länge der Speichenelemente von Schicht zu Schicht abnimmt.

Das zuvor beschriebene erfindungsgemäße Speichenrad wird bevorzugt für den Einbau in einen Speicher für stabförmige Produkte der Tabak verarbeitenden Industrie, wie insbesondere für Zigaretten oder Zigarettenfilter, verwendet. Ein solcher Speicher, wie er beispielsweise grundsätzlich in der EP 1 621 490 A1 beschrieben ist, hat die Form einer Schraube mit in die Länge gezogenen Windungen, wobei eine Endlosförderkette, wie sie beispielsweise in der EP 1 535 865 A2 beschrieben ist, einen Strom von mehrlagig gestapelten stabförmigen Produkten trägt. Dabei liegen die stabförmigen Produkte quer zur Förderrichtung in gestapelter Weise auf der Förderkette auf, die zur Aufnahme der stabförmigen Produkte aus im Wesentlichen flachen, wannenförmigen Kettengliedern besteht. Die Endlosförderkette läuft um voneinander beabstandete Säulen aus Rädern. Die Neuerung besteht nun darin, diese Räder als Speichenräder mit der zuvor beschriebenen Konstruktion gemäß der vorliegenden Erfindung auszubilden.

## Patentansprüche

1. Speichenrad, insbesondere zum Umlenken einer Förderkette, mit einer Nabe (2), die eine zentrale Bohrung (4) zur Aufnahme einer Welle oder Achse enthält, mit einem zur zentralen Bohrung (4) konzentrisch verlaufenden ringförmigen Radkranz (10) und mit mehreren sich von der Nabe (2) zum Radkranz (10), bevorzugt radial, erstreckenden Speichen (8), **dadurch gekennzeichnet, dass** die Speichen (8) eine Schichtung von mehreren übereinanderliegenden, sich von der Nabe (2) erstreckenden und miteinander befestigten laschenförmigen Speichenelementen (11 bis 14; 11 bis 16) aufweisen, von denen jedes Speichenelement eine Schicht bildet, wobei zumindest über einen Abschnitt der Schichtung die Länge der Speichenelemente (11 bis 14; 11 bis 16) von Schicht zu Schicht abnimmt und mindestens ein Speichenelement (11) mit dem Radkranz (10) verbunden ist.

2. Speichenrad nach Anspruch 1, **dadurch gekennzeichnet, dass** zumindest über einen Abschnitt der Schichtung die Länge der Speichenelemente (11 bis 14; 11 bis 16) etwa gleichmäßig von Schicht zu Schicht abnimmt.

3. Speichenrad nach Anspruch 1 oder 2, **dadurch gekennzeichnet, dass** über die gesamte Schichtung die Länge der Speichenelemente (11 bis 14; 11 bis 16) von Schicht zu Schicht abnimmt.

4. Speichenrad nach mindestens einem der vorangegangenen Ansprüche, **dadurch gekennzeichnet, dass** die Speichenelemente (11 bis 14; 11 bis 16) durch Schrauben (18), Nieten, Klammern und/oder Verschweißen miteinander befestigt sind.

5. Speichenrad nach mindestens einem der vorangegangenen Ansprüche, **dadurch gekennzeichnet, dass** die Speichenelemente (11 bis 14; 11 bis 16) einen, bevorzugt aufgeweiteten, Kopfabschnitt (11 a bis 14a; 11 a bis 16a) aufweisen, die Nabe (2) aus den Kopfabschnitten der Speichenelemente (11 bis 14; 11 bis 16) gebildet ist und die Kopfabschnitte (11a bis 14a; 11a bis 16a) der Speichenelemente (11 bis 14; 11 bis 16) eine Stirnfläche (z.B. 12b) aufweisen, die zur Bildung der zentralen Bohrung (4) entsprechend gekrümmt ist.

6. Speichenrad nach mindestens einem der vorangegangenen Ansprüche, **dadurch gekennzeichnet, dass** zumindest eine Schicht von einem Flachkörper (20) gebildet wird, der aus dem Radkranz (10), den Speichenelementen (11) und einem Nabenabschnitt (11a) besteht, wobei der Radkranz (10), die Speichenelemente (11) und der Nabenabschnitt (11a) einstückig miteinander verbunden sind.

7. Speichenrad nach mindestens einem der vorangegangenen Ansprüche, **dadurch gekennzeichnet, dass** diejenigen Speichenelemente, die mit dem Radkranz verbunden sind, in einer etwa in der Mitte der Schichtung befindlichen Schicht liegen.

8. Speichenrad nach den Ansprüchen 6 und 7, **dadurch gekennzeichnet, dass** der Flachkörper eine etwa in der Mitte der Schichtung befindliche Schicht bildet.

9. Speichenrad nach Anspruch 7 oder 8, **dadurch gekennzeichnet, dass** zu beiden Seiten der Schichtung die Länge der Speichenelemente von Schicht zu Schicht abnimmt.

10. Speichenrad nach mindestens einem der vorangegangenen Ansprüche, **dadurch gekennzeichnet, dass** in mindestens einer Schicht ein Flachkörper (22) vorhanden ist, der aus den Speichenelementen (14; 16) und einem Nabenabschnitt (14a; 16a) besteht, wobei die Speichenelemente (14; 16) und der Nabenabschnitt (14a; 16a) einstückig miteinander verbunden sind.

11. Speichenrad nach Anspruch 10, **dadurch gekennzeichnet, dass** der Flachkörper (22) mit den kürzesten Speichenelementen (14; 16) eine äußere Schicht bildet.

12. Speichenrad nach mindestens einem der vorangegangenen Ansprüche, **dadurch gekennzeichnet, dass** es im Wesentlichen aus Aluminium hergestellt ist.

13. Verwendung mindestens eines Speichenrades nach mindestens einem der vorangegangenen Ansprüche zum Umlenken einer stabförmige Produkte der Tabak verarbeitenden Industrie aufnehmenden Förderkette in einer Speichervorrichtung zum Zwischenspeichern der stabförmigen Produkte.

14. Speichervorrichtung zum Zwischenspeichern von stabförmigen Produkten der Tabak verarbeitenden Industrie, mit einer Förderkette zur Aufnahme der stabförmigen Produkte, **gekennzeichnet durch** mindestens ein Speichenrad nach mindestens einem der Ansprüche 1 bis 12, um das die Förderkette umgelenkt wird.

15. Verfahren zur Herstellung eines Speichenrades nach Anspruch 6 sowie ggf. nach mindestens einem der Ansprüche 2 bis 5 und 7 bis 12, **dadurch gekennzeichnet, dass** aus einer, bevorzugt scheibenförmigen, Platte der Flachkörper (20) ausgeschnitten wird und aus den dabei jeweils zwischen zwei benachbarten Speichenelementen (11) des herausgeschnittenen Flachkörpers (20) frei werdenden Abschnitten der Platte die übrigen Speichenelemente (12 bis 14; 12 bis 16) in im Wesentlichen gleicher Ausrichtung herausgeschnitten werden.

## Claims

1. Spoked wheel, in particular for diverting a conveyor chain, comprising a hub (2) which contains a central bore (4) for receiving a shaft or axle, comprising an annular rim (10) running concentrically in relation to the central bore (4), and comprising a plurality of spokes (8) extending, preferably radially, from the hub (2) to the rim (10),
**characterised in that** the spokes (8) comprise a layering of a plurality of tongue-like spoke elements (11 to 14; 11 to 16) which are arranged one above the other and extend from the hub (2) and are fastened to one another, of which each spoke element forms one layer, wherein at least over a portion of the layering the length of the spoke elements (11 to 14; 11 to 16) decreases from layer to layer and at least one spoke element (11) is connected to the rim (10).

2. Spoked wheel according to claim 1, **characterised in that** at least over a portion of the layering the length of the spoke elements (11 to 14; 11 to 16) decreases approximately steadily from layer to layer.

3. Spoked wheel according to claim 1 or 2, **characterised in that** over the entire layering the length of the spoke elements (11 to 14 ; 11 to 16) decreases from layer to layer.

4. Spoked wheel according to at least one of the preceding claims, **characterised in that** the spoke elements (11 to 14; 11 to 16) are fastened to one another by means of screws (18), rivets, clamps and/or welding.

5. Spoked wheel according to at least one of the preceding claims, **characterised in that** the spoke elements (11 to 14; 11 to 16) have a, preferably widened, head section (11a to 14a; 11a to 16a), the hub (2) is formed from the head sections of the spoke elements (11 to 14; 11 to 16) and the head sections (11a to 14a; 11a to 16a) of the spoke elements (11 to 14; 11 to 16) have an end face (for example 12b) which is suitably curved to form the central bore (4).

6. Spoked wheel according to at least one of the preceding claims, **characterised in that** at least one layer is formed by a flat body (20) which consists of the rim (10), the spoke elements (11) and a hub section (11a), wherein the rim (10), the spoke elements (11) and the hub section (11a) are connected to one another in one piece.

7. Spoked wheel according to at least one of the preceding claims, **characterised in that** those spoke elements which are connected to the rim lie in a layer that is located approximately in the middle of the layering.

8. Spoked wheel according to claims 6 and 7, **characterised in that** the flat body forms a layer that is located approximately in the middle of the layering.

9. Spoked wheel according to claim 7 or 8, **characterised in that** on both sides of the layering the length of the spoke elements decreases from layer to layer.

10. Spoked wheel according to at least one of the preceding claims, **characterised in that** in at least one layer there is a flat body (22) which consists of the spoke elements (14 ; 16) and a hub section (14a; 16a), wherein the spoke elements (14; 16) and the hub section (14a; 16a) are connected to one another in one piece.

11. Spoked wheel according to claim 10, **characterised in that** the flat body (22) having the shortest spoke elements (14; 16) forms an outer layer.

12. Spoked wheel according to at least one of the preceding claims, **characterised in that** it is made substantially of aluminium.

13. Use of at least one spoked wheel according to at least one of the preceding claims for diverting a conveyor chain, which receives rod-shaped products of the tobacco-processing industry, in a storage device for buffer-storing the rod-shaped products.

14. Storage device for buffer-storing rod-shaped products of the tobacco-processing industry, comprising a conveyor chain for receiving the rod-shaped products, **characterised by** at least one spoked wheel according to at least one of claims 1 to 12, around which the conveyor chain is diverted.

15. Method for manufacturing a spoked wheel according to claim 6 and optionally according to at least one of claims 2 to 5 and 7 to 12, **characterised in that** the flat body (20) is cut out of a plate that is preferably disc-shaped and, from the sections of the plate which thereby become free in each case between two adjacent spoke elements (11) of the flat body (20) that has been cut out, the remaining spoke elements (12 to 14 ; 12 to 16) are cut out in substantially the same orientation.

## Revendications

1. Roue à rayons, en particulier destinée à dévier une chaîne transporteuse, comprenant un moyeu (2), pourvu d'un alésage central (4) pour recevoir un arbre ou un axe, une jante (10) annulaire s'étendant de manière concentrique à l'alésage central (4) et plusieurs rayons (8) s'étendant, de préférence radialement, du moyeu (2) à la jante (10),
**caractérisée en ce que** les rayons (8) présentent un empilage de plusieurs éléments de rayons (11 à 14 ; 11 à 16) superposés et en forme de pattes, s'étendant à partir du moyeu (2) et fixés les uns aux autres, chaque élément de rayon formant une couche, la longueur des éléments de rayons (11 à 14 ; 11 à 16) diminuant de couche en couche au moins sur une partie de l'empilage et au moins un élément de rayon (11) étant raccordé à la jante (10).

2. Roue à rayons selon la revendication 1, **caractérisée en ce qu'**au moins sur une partie de l'empilage la longueur des éléments de rayons (11 à 14 ; 11 à 16) diminue de couche en couche de façon sensiblement régulière.

3. Roue à rayons selon la revendication 1 ou 2, **caractérisée en ce que** la longueur des éléments de rayons (11 à 14 ; 11 à 16) diminue de couche en couche sur tout l'empilage.

4. Roue à rayons selon au moins l'une des revendications précédentes, **caractérisée en ce que** les éléments de rayons (11 à 14 ; 11 à 16) sont fixés les uns aux autres par vis (18), rivetage, agrafage et/ou soudage.

5. Roue à rayons selon au moins l'une des revendications précédentes, **caractérisée en ce que** les éléments de rayons (11 à 14 ; 11 à 16) présentent une partie de tête (11a à 14a ; 11a à 16a), de préférence élargie, le moyeu (2) est formé des parties de tête des éléments de rayons (11 à 14 ; 11 à 16) et les parties de tête (11a à 14a ; 11a à 16a) des éléments de rayons (11 à 14 ; 11 à 16) présentent une face frontale (par ex. 12b) recourbée de manière correspondante pour former l'alésage central (4).

6. Roue à rayons selon au moins l'une des revendications précédentes, **caractérisée en ce qu'**au moins une couche est formée d'un corps plat (20) constitué de la jante (10), des éléments de rayons (11) et d'une partie de moyeu (11a), la jante (10), les éléments de rayons (11) et la partie de moyeu (11a) étant reliés entre eux de manière solidaire.

7. Roue à rayons selon au moins l'une des revendications précédentes, **caractérisée en ce que** les éléments de rayons qui sont reliés à la jante sont situés dans une couche se trouvant sensiblement au centre de l'empilage.

8. Roue à rayons selon les revendications 6 et 7, **caractérisée en ce que** le corps plat forme une couche située sensiblement au centre de l'empilage.

9. Roue à rayons selon la revendication 7 ou 8, **caractérisée en ce que**, des deux côtés de l'empilage, la longueur des éléments de rayons diminue de couche en couche.

10. Roue à rayons selon au moins l'une des revendications précédentes, **caractérisée en ce qu'**est présent dans au moins une couche un corps plat (22) constitué des éléments de rayons (14 ; 16) et d'une partie de moyeu (14a ; 16a), les éléments de rayons (14 ; 16) et la partie de moyeu (14a ; 16a) étant reliés entre eux de manière solidaire.

11. Roue à rayons selon la revendication 10, **caractérisée en ce que** le corps plat (22) forme une couche extérieure avec les éléments de rayons (14 ; 16) les plus courts.

12. Roue à rayons selon au moins l'une des revendications précédentes, **caractérisée en ce qu'**elle est essentiellement réalisée an aluminium.

13. Utilisation d'au moins une roue à rayons selon au moins l'une des revendications précédentes, destinée à dévier une chaîne transporteuse recevant des produits en forme de tiges de l'industrie de transformation du tabac dans un dispositif de stockage pour le stockage intermédiaire des produits en forme de tiges.

14. Dispositif de stockage pour le stockage intermédiaire de produits en forme de tiges de l'industrie de transformation du tabac, comprenant une chaîne transporteuse destinée à recevoir les produits en forme de tiges, **caractérisé par** au moins une roue à rayons selon au moins l'une des revendications 1 à 12, autour de laquelle est déviée la chaîne transporteuse.

15. Procédé de fabrication d'une roue à rayons selon la revendication 6 ainsi que, le cas échéant, selon au moins l'une des revendications 2 à 5 et 7 à 12, **caractérisé en ce que** l'on découpe le corps plat (20) à partir d'une plaque, de préférence en forme de disque, et, à partir des portions de la plaque respectivement dégagées entre deux éléments de rayons (11) adjacents du corps plat (20) découpé, on découpe les éléments de rayons restants (12 à 14 ; 12 à 16) sensiblement selon la même orientation.
